# EUROPEAN PATENT SPECIFICATION

(11) **EP 4 306 346 B1**
(45) Date of publication and mention of the grant of the patent: **18.02.2026**
(21) Application number: 22185152.0
(22) Date of filing: 15.07.2022
(51) Int. Cl.: B60J 7/04

(54) **COVER ASSEMBLY FOR TRUCK BED**
ABDECKUNGSANORDNUNG FÜR EINE LKW-LADEFLÄCHE
ENSEMBLE COUVERCLE DE PLATEAU

(43) Date of publication of application: 17.01.2024
(73) Proprietor: Gi.Anso 4x4 Club S.A., 19200 Elefsina-Attikis (GR)
(72) Inventor: Michailidis, Athinodoros, 19200 ELEFSINA-ATTIKIS (GR)
(74) Representative: Araujo, Daniel

(56) References cited:
- WO-A1-90/02056
- DE-A1- 102015 004 859
- FR-A1- 2 824 867
- US-A- 3 092 170

## Description

### Field of the invention

The invention relates to a cover assembly for the truck bed of a pick-up type vehicle, and in particular to a cover assembly comprising a housing box for receiving and storing a rollable curtain, said housing box being configured for the rollable curtain to be manually operated by a user and adapted to detachably receive a torsion spring or an electric motor, such that the rollable curtain can be optionally adapted to be semi-automatically or automatically operated.

### Background

Patent application document WO 90/02056 A1 describes a cover assembly for covering an opening comprising an articulated cover, mounted on a pair of tracks, and a housing having a pair of spiral grooves for receiving and storing the cover in a spiral configuration. Patent application document FR 2 824 867 A1 describes a roller blind that comprises a shutter comprising a series of mutually articulated laths. Also, FR 2 824 867 A1 describes that the shutter is wound and unwound by a driving mechanism connected to the shutter by coupling elements, and there are shutter guide elements for guiding the shutter.

The design and use of retractable roll-up truck bed covers with open bed pickup trucks to provide security and protection for cargo items carried within the truck bed is well known. Conventional retractable roll-up truck bed covers commonly include a plurality of individual slats hingedly connected to form a slat array. The hinged connection of individual slats enables the slat array to form a continuous cover that, once mounted in a pair of side rails, can be either completely or partially extended or retracted and stored in a rolled-up configuration inside a housing.

There are several types of known roll-up covers. There are roll-up covers manually operated in both directions, with no spring or electric motor, that comprise helical trackways, which cause the cover to assume a substantially rolled position. However, this type of roll-up covers have the disadvantage of not rolling up straight if the user-applied application force is not applied evenly along the width of the cover, causing the cover to be crooked. Also, this type of roll-up covers cannot be converted to a spring or electric motor assisted cover.

There are also roll-up covers with a spring-loaded shaft which aids the user upon winding of the curtain. The function of this type of roll up covers is absolutely associated with the spring, such that in case of spring failure the roll-up covers cannot be operated. Also, this type of roll-up covers cannot be converted to manual or electric motor version of the cover.

Further, there are roll-up covers with helical trackways or spring-loaded shafts comprising an electric motor mounted on an auxiliary shaft inside the housing or in a position outside the housing box. In case of an emergency or electric motor failure, there are mechanisms to allow the user to operate the roll up cover manually. However, there still remains the need for the electric motor to be replaced as this roll-up cover cannot be operated manually in the long term. Also, this type of roll-up covers cannot be converted to a manual or spring assisted version of the cover.

Hence, there remains a need for a cover system that can be easily adapted by a user, with no tools or specific knowledge, from a manually operated cover to a spring or an electric motor assisted cover and vice versa, and wherein the spring and/or electric motor can be easily replaced in case of malfunction or failure of the same.

### Summary of the invention

In accordance with the invention a cover assembly for a pickup truck bed is provided as defined in claim 1. The cover assembly comprises a rollable curtain formed of a plurality of transverse adjacent panels or slats hingedly linked to one another and guided along channel portions of a pair of side rails adapted to be mounted on upper portions of the side walls of the truck bed.

According to the invention, the cover assembly comprises a housing box for receiving and storing the rollable curtain. Said housing comprising a transverse rotatable shaft mounted therein and one or more curtain collapsible engaging means, each mounted to one or more sleeve elements, for transforming the rotational movement of the shaft 6 into a linear motion of the rollable curtain 1, in an evenly distributed manner along the whole width of the rollable curtain.

According to the invention, the housing box for storing the rollable curtain has side walls comprising helical trackways to help guide the rollable curtain free of excessive frictional resistance upon extending or retracting the same.

According to the invention, the rotatable shaft and a clamping system at a side wall of the housing box are adapted to slidably and removably receive a torsion spring-loaded assembly or an electric motor assembly, such that a user can easily turn a manually operated cover assembly into a semi-automated or automated cover assembly and vice versa, with no tools or specific knowledge.

### Brief description of the drawings

A more complete understanding of our invention and its advantages will be apparent from the detailed description taken in conjunction with the accompanying drawings in which:
FIG. 1 is a perspective schematic view of a cover assembly in accordance with the invention installed onto a conventional pickup truck bed.
FIG. 2 is a cross sectional side view of a cover assembly in accordance with the invention, wherein the rollable curtain is in a fully extended position.
FIG. 3 is a cross sectional side view of a cover assembly in accordance with the invention, wherein the rollable curtain is in a partially extended position.
FIG. 4 is a cross sectional side perspective view of the housing box in accordance with the invention, wherein the rollable curtain is in a fully retracted position.
FIG. 5 is a cross sectional front view of the housing box in accordance with the invention, wherein the rollable curtain is in a fully retracted position.
FIG. 6a is a perspective view of a cover assembly, showing a torsion spring-loaded assembly according to an embodiment of the invention.
FIG. 6b is a detail view of the second end portion of the torsion spring-loaded assembly of FIG. 6a.
FIG. 7a is a perspective view of a cover assembly, showing an electric motor assembly according to an embodiment of the invention.
FIG. 7b is a detail exploded view of the first end portion of the electric motor assembly of FIG. 7a.
FIGs. 8 is a perspective view showing the retaining mechanism of the housing box in an unlocked arrangement, when comprising a torsion spring-loaded assembly or an electric motor assembly according to embodiments of the invention.
FIGs. 9 is a perspective view showing the retaining mechanism of the housing box in a locked arrangement, when comprising a torsion spring-loaded assembly or an electric motor assembly according to embodiments of the invention.
FIG. 10 is a side perspective view of the housing box according to an embodiment of the present invention.
FIG. 11 is a partial top perspective view of the rollable curtain according to an embodiment of the present invention.
FIG. 12 shows a wiring diagram of the cover assembly according to an embodiment of the invention.

### Detailed description of the invention

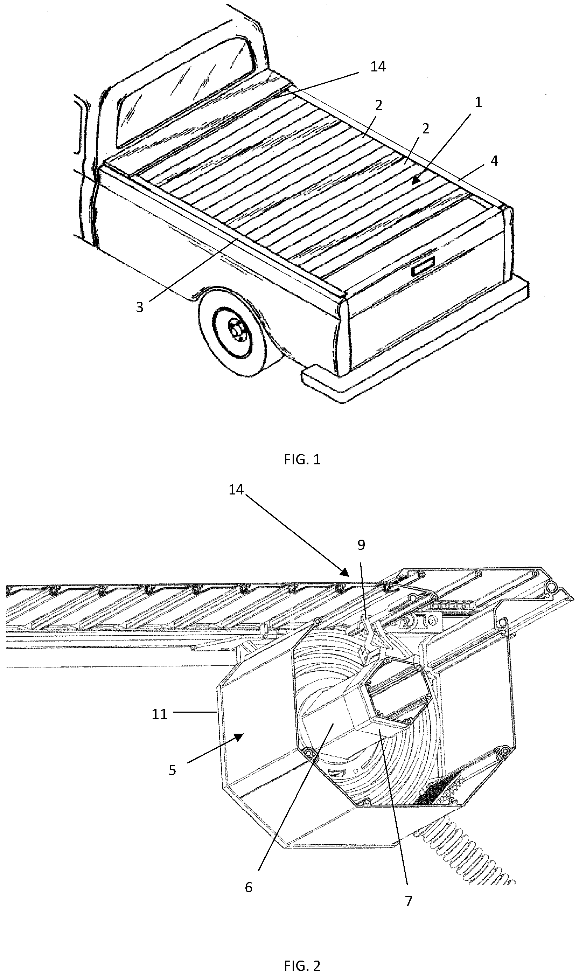

Referring now to the drawings and specifically FIG. 1, the cover assembly of the invention is shown installed upon an existing conventional pickup truck, the rollable curtain 1 comprising a plurality of transverse adjacent panels or slats 2 which extend laterally across the pickup truck bed and are hingedly linked to one another. A pair of side rails 3, 4 are disposed in parallel relation to one another on upper portions of the side walls of the truck bed, respectively, said side rails 3, 4 comprising channel portions for guiding the end portions of the transverse adjacent panels 2.

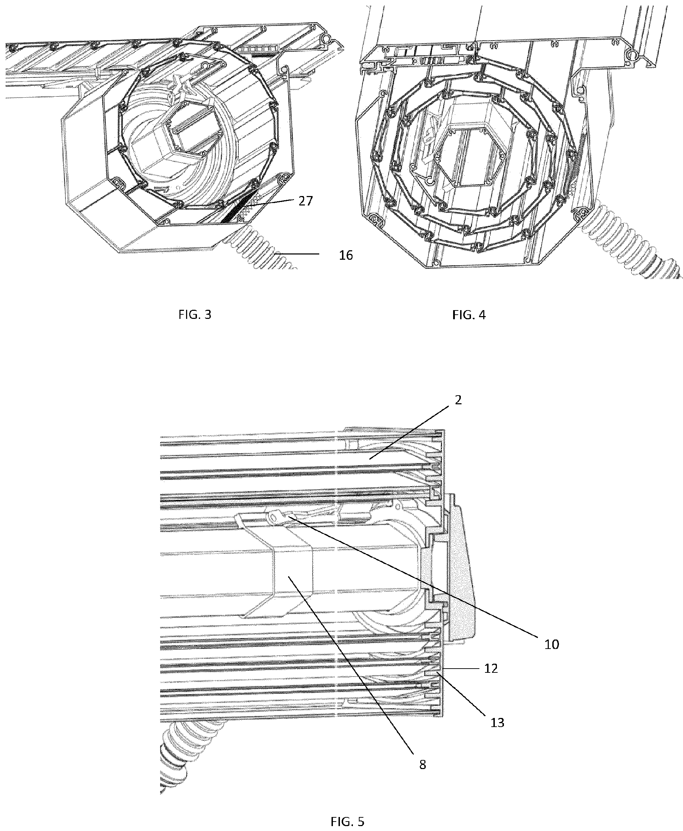

Referring to FIGs. 2 and 3, a housing box 5 adapted to be mounted at the forward end of the truck bed for receiving and storing the rollable curtain 1, is shown. Said housing box 5 comprising a transverse rotatable shaft 6 mounted therein.

According to an embodiment of the invention, the transverse rotatable shaft 6 has a polygonal shape, for example a hexagonal shape.

One or more sleeve elements 7, 8 are mounted on said transverse rotatable shaft 6 for receiving one or more collapsible curtain engaging means 9, 10, each mounted to said one or more sleeve elements 7, 8, respectively, and designed to engage an inner end of the rollable curtain 1 and to transform the rotational movement of the shaft 6 into a linear motion of the rollable curtain 1.

"Linear" is understood to mean that the rollable curtain describes a line that can be straight or curved.

Said one or more collapsible curtain engaging elements 9, 10 will ride along in engagement with the rollable curtain 1, gradually collapse as the rollable curtain 1 is retracted and gradually rise as the rollable curtain 1 is extended.

Thus, as a user manually guides the rollable curtain 1 towards a retracted or an extended position, the linear motion of the rollable curtain 1 is transformed into a rotational movement of the of the transverse rotatable shaft 6 by means of said one or more collapsible curtain engaging elements 9, 10.

According to the present invention, each of the one or more curtain collapsible engaging means 9, 10 is hingedly and slidably mounted to said one or more sleeve elements 7, 8, respectively, such that as the rollable curtain 1 is retracted each of the one or more curtain collapsible engaging means 9, 10 gradually collapses and gradually slides along a groove provided on each of the one or more sleeve elements 7, 8 until reaching a totally collapsed position when the rollable curtain 1 is in a fully retracted position, as shown in FIG. 4, and such that as the rollable curtain 1 is extended each of the one or more curtain collapsible elements 9, 10 gradually rises and gradually slides in the opposite direction until reaching a totally raised position when the rollable curtain 1 is in a fully extended position, as shown in FIG. 2.

Referring to FIG. 5, the housing box 5 comprises side walls 11, 12, each having inwardly extending continuous helical trackways 13, as shown in FIG. 5, defining a rolling path, the helical trackways 13 being aligned with the channel portions of the side rails 3, 4 to receive the transverse adjacent panels 2 as they are translated forwardly into a retracted position. Utilization of the helical trackways 13 to store the cover in a retracted position enables extension and retraction of the cover free of excessive frictional resistance.

At least one of the side walls 11, 12 of the housing box 5 comprises an opening 15. According to the invention, the housing box 5 further comprises an elongated opening 14, as shown in FIG. 1, in top surface thereof, for the rollable curtain 1 to extend outwardly.

The opening 14 has a sufficient width to accommodate the width of the rollable curtain 1.

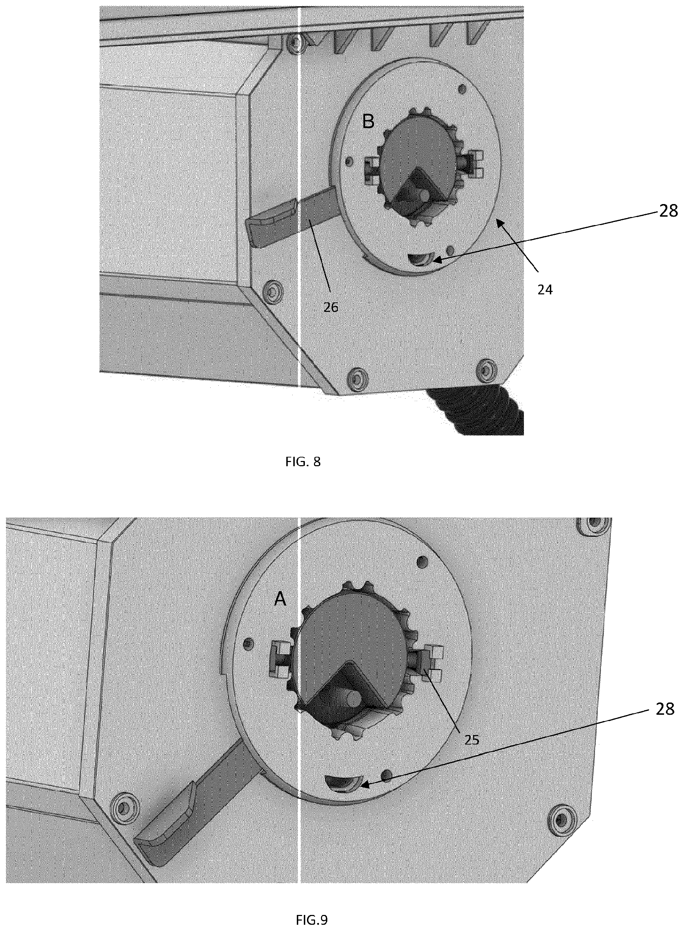

The housing box 5 may comprise one or more drainage pipe 16 arranged in the bottom, back or sides of housing box to drain out water and encourage air circulation, to minimize humidity and to avoid corrosion on the rollable curtain 1 while it is stored within housing box 5. Further, one or more anti-leaf system 27 may be present in the inner bottom and/or inner sides of the housing box 5 to prevent blockage of said drainage pipe 16. Additionally, it is also contemplated that the housing box 5 comprises overflow means 28, shown in Fig. 8 & 9, arranged at each side wall of the housing box.

It is also contemplated that the housing box 5 comprises a water level sensor, not shown.

According to an embodiment of the present invention, the transverse rotatable shaft 6 is hollow and is adapted to, optionally, coaxially, slidably and removably receive a torsion spring-loaded assembly 17 or an electric motor assembly 18, through said opening 15.

The torsion spring-loaded assembly 17 comprises a torsion spring that tightens when the rollable curtain 1 is extended, and loosens upon retraction of the rollable curtain 1.

The torsion spring stores energy during extension of the rollable curtain 1 and releases energy during retraction of the curtain in order to assist the user's operation.

The torsion spring-loaded assembly 17 comprises a torsion spring, a first end section 17a comprising drive means 20 designed to internally engage the transverse rotatable shaft 6 for transmitting the torque force from the torsion spring to the transverse rotatable shaft 6, and a second end section 17b comprising engaging means 22 designed for engaging the torsion spring-loaded assembly 17 within opening 15. Further, said second end section 17b may comprise a polygonal shaped element 26, such that a user, by means of a tool such as a wrench, is able to adjust the torsion spring tension.

When semi-automatically operated, i.e., by means of the torsion spring-loaded assembly 17, the rollable curtain 1 may be manually locked and unlocked by means of a locking mechanism, not shown, provided on an end slat of the rollable curtain 1 to maintain a spring bias when the cover is in an extended position.

In an embodiment, the electric motor assembly 18 comprises an electric motor, a first end section 18a comprising drive means 21 designed to internally engage the transverse rotatable shaft 6 for transmitting the rotary force from the electric motor to the transverse rotatable shaft 6, and a second end section 18b comprising engaging means 23 designed for engaging the electric motor assembly 18 with the clamping system (24) at the side wall of the housing box.

In a preferred embodiment of the invention, the electric motor is a conventional DC electric motor.

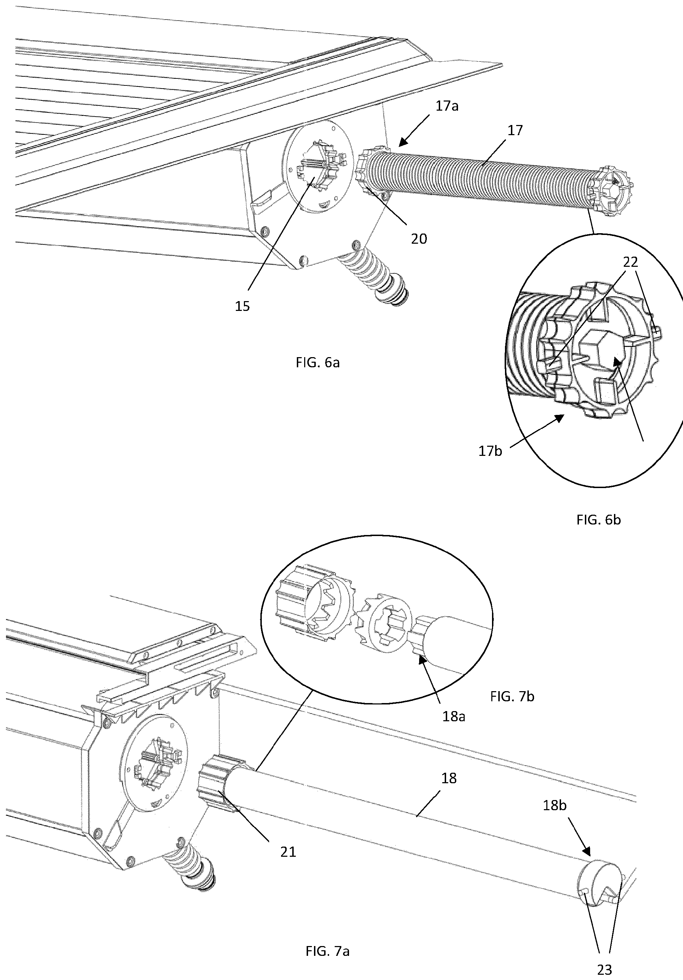

As shown in FIGs. 6a, 7a and 7b, drive means 20, 21 include engagement notches spaced about the outer circumferential surface thereof for inter-engagement with depending portions, designed to be in driving engagement with said gear means 20, 21, arranged on the inner surface of the transverse rotatable shaft 6.

In an embodiment of the present invention, said engagement notches have a tapered shape, generally V-shape, or a U-shape to facilitate disengagement of the electric motor assembly 18 from the rotatable shaft 6 upon failure of the power system.

The external profile of the drive means 20, 21 matches the clamping system (24) at the side wall of the housing box, such that a user can easily introduce the torsion spring-loaded assembly 17 or the electric motor assembly 18 through the opening 15 into the transverse rotatable shaft 6.

In operation, the cover assembly of the present invention, when comprising the electric motor assembly 18, is electrically operable to be moved between extended, semi-extended and retracted positions. The rollable curtain 1 can be stopped and locked at any spot by means of an auto locking mechanism.

The drive means 21 is connected with the electric motor means by means of a gear comprised within the first section 18a, as shown in FIG. 7b, so that said first end section 18a is rotatable in a first direction of rotation, upon an "unwinding" actuation of the motor. The first end section 18a is rotatable in a second direction of rotation opposite the first direction, upon a "winding" actuation of the electric motor.

In contemplated embodiments of the present invention, the drive means 21 may be removable from said first section 18a such they can disengage from the electric motor assembly 18 and remain inside the shaft 6.

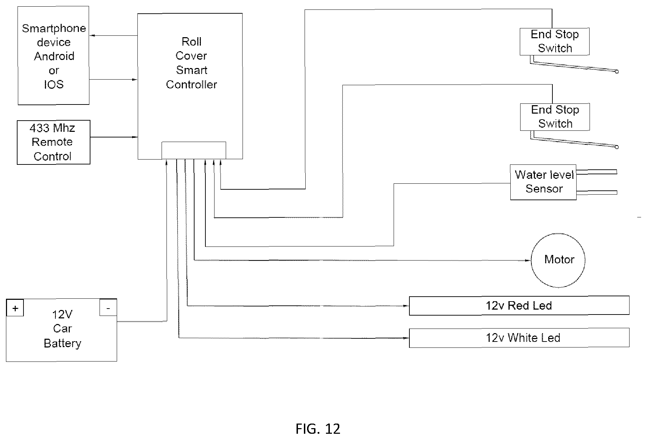

The electric motor is driven by a smart-Al control circuit board 19 mounted on a side wall 11,12 of the housing box 5, as shown in FIG.12. Said smart-Al controller circuit board 19 is preferably connected to the vehicle battery.

A control panel means, not shown, may be mounted on or adjacent the housing box 5 and/or in the truck cab and/or in the side rails and/or in the end slat.

The electric motor assembly 18 may be remotely controlled by a remote controller or an app installed in a smartphone. Additionally, or alternatively, the electric motor may be operated by an actuator incorporated at the end slat. The rollable curtain 1 can thus be opened, closed, stopped and/or locked automatically at any spot.

Referring now to FIGs. 8 and 9, the cover assembly provides manual engagement and disengagement of the torsion spring-loaded assembly 17 or the electric motor assembly 18 by a user.

One side wall 11, 12 of the housing box 5 includes a retaining mechanism 24 comprising a retaining member 25, that is selectively movable between a first position A in which a retaining member blocks removal of the torsion spring-loaded assembly 17 or the electric motor assembly 18, more specifically blocks the engaging means 22, 23 of the torsion spring-loaded assembly 17 or the electric motor assembly 18, respectively, as shown in FIG. 9, and a second position B in which the retaining member does not block removal of the spring-loaded assembly 17 or the electric motor 18 assembly, as shown in FIG 8. The retaining member 25 is selectively movable by means of a manual actuator 26, such that a user can easily engage/disengage the torsion spring-loaded assembly 17 or the electric motor assembly 18 without the need of tools or special knowledge.

In one embodiment of the invention, as shown in FIG.9, the manual actuator is a lever 26.

Constructional elements of the electric motor assembly 18 and spring-loaded assembly 17 in combination with the configuration or design of the shaft 6 and opening 15 result in a sealed system once the electric motor assembly 18 or spring-loaded assembly 17 is inserted in the opening 15 and locked by means of said retaining member.

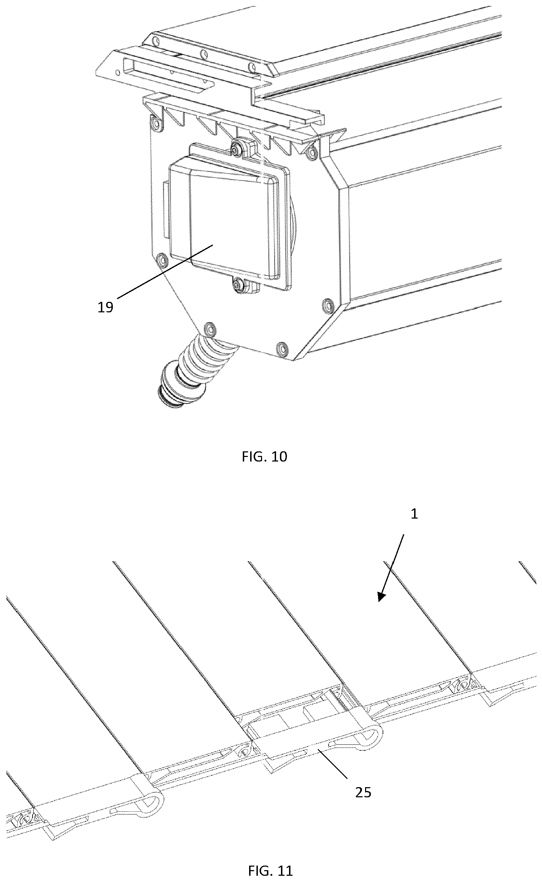

In any of the embodiments of the invention, the cover assembly may comprise a plurality of cable guiding elements 25, as shown in FIG. 11, mounted to at least part of the plurality of adjacent transverse panels 2 and configured to receive cable wires therethrough for providing a wired connection to the cover assembly.

The cover assembly of the invention may further comprise a plurality of electric elements arranged on the transverse panels or slats 2, including an end slat, such as light elements or sensors means connected by means of said wired connection. Said electric elements may be remotely controlled, as shown in FIG.11.

While the embodiments have been described in detail in the description, the same is to be considered illustrative and not restrictive in character, being understood that it would be obvious to those skilled in the art that various other changes and modifications may be made without departing from the scope of the invention as defined in the appended claims.

## Claims

1. A cover assembly for the truck bed of a pick-up type vehicle, said cover assembly comprising:
a rollable curtain (1) comprising a plurality of transverse adjacent panels (2) hingedly linked to one another;
a pair of side rails (3, 4) adapted to be mounted on upper portions of the side walls of the truck bed and comprising guiding channels for guiding the end portions of the transverse adjacent panels (2);
a housing box (5) adapted to be mounted at the forward end of the truck bed for receiving and storing the rollable curtain (1),
wherein the housing box (5) comprises:
a transverse rotatable shaft (6) mounted within the housing box (5);
one or more collapsible curtain engaging means (9, 10) designed to engage an inner end of the rollable curtain (1) and to transform the rotational movement of the shaft (6) into a linear motion of the rollable curtain (1); and
side walls (11, 12), each having inwardly extending continuous helical trackways (13) defining a rolling path, the helical trackways being aligned with the guiding channels of the side rails (3, 4) to receive the transverse adjacent panels (2) as they are translated forwardly into a retracted position;
**characterised in that** the cover assembly further comprises one or more sleeve elements (7,8) mounted on said transverse rotatable shaft (6), wherein said one or more collapsible curtain engaging means (9, 10) are each
hingedly and slidably mounted to said one or more sleeve elements (7, 8), respectively.

2. The cover assembly according to claim 1 , wherein at least one of the side walls (11, 12) of the housing box (5) comprises an opening (15).

3. The cover assembly according to claims 1 or 2, wherein the transverse rotatable shaft (6) has a polygonal shape, preferably a hexagonal shape.

4. The cover assembly according to any of the preceding claims, wherein the transverse rotatable shaft (6) is hollow.

5. The cover assembly according to claims 2 and 4, wherein the transverse rotatable shaft (6) and a clamping system (24) at a side wall of the housing box are adapted to slidably and removably receive a torsion spring-loaded assembly (17).

6. The cover assembly according to claims 1 and 5, wherein the cover assembly further comprises a torsion spring-loaded assembly (17).

7. The cover assembly according to claims 2 and 4, wherein the transverse rotatable shaft (6) and a clamping system (24) at a side wall of the housing box are adapted to slidably and removably receive an electric motor assembly (18).

8. The cover assembly according to claims 1 and 7, wherein the cover assembly further comprises an electric motor assembly (18).

9. The cover assembly according to claim 8, wherein the electric motor assembly (18) is driven by a smart-Al controller circuit board (19) mounted on the housing box (5).

10. The cover assembly according to claims 8 or 9, wherein the electric motor assembly (18) is configured to be remotely controlled by means of said smart-Al controller circuit board (19).

11. The cover assembly according to claim 10, wherein the electric motor assembly (18) is remotely controlled by a remote controller or an app installed in a smartphone.

12. The cover assembly according to claims 6 and 8, wherein the torsion spring-loaded assembly (17) and the electric motor assembly (18) comprise drive means (20, 21), mounted for rotation, for internally engaging the transverse rotatable shaft (6).

13. The cover system according to claims 6 to 12, wherein the torsion spring-loaded assembly (17) and the electric motor assembly (18) comprise engaging means (22, 23) for engaging a side wall (11, 12) of the housing box (5).

14. The cover system according to claims 6 to 13, wherein a side wall (11, 12) of the housing box (5) includes a retaining mechanism (24) comprising a retaining member (25), that is selectively movable between a first position in which a retaining member blocks removal of the torsion spring-loaded assembly (17) or the electric motor assembly (18), and a second position in which the retaining member does not block removal of the spring-loaded assembly (17) or the electric motor (18) assembly, respectively.

## Patentansprüche

1. Abdeckungsanordnung für die LKW-Ladefläche eines Fahrzeugs vom Typ Pick-up, wobei die Abdeckungsanordnung Folgendes umfasst:
einen aufrollbaren Vorhang (1), der eine Vielzahl von benachbarten Querplatten (2) umfasst, die gelenkig miteinander verbunden sind;
ein Paar Seitenschienen (3, 4), die dazu angepasst sind, an oberen Abschnitten der Seitenwände der LKW-Ladefläche montiert zu werden und die Führungskanäle zum Führen der Endabschnitte der benachbarten Querplatten (2) umfassen;
einen Gehäusekasten (5), der dazu angepasst ist, am vorderen Ende der LKW-Ladefläche montiert zu werden, um den aufrollbaren Vorhang (1) aufzunehmen und zu lagern, wobei der Gehäusekasten (5) Folgendes umfasst:
eine querliegende Drehwelle (6), die innerhalb des Gehäusekastens (5) montiert ist;
ein oder mehrere zusammenklappbare Vorhangeingriffsmittel (9, 10), die dazu ausgelegt sind, in ein inneres Ende des aufrollbaren Vorhangs (1) einzugreifen und die Drehbewegung der Welle (6) in eine lineare Bewegung des aufrollbaren Vorhangs (1) umzusetzen; und
Seitenwände (11, 12), die jeweils sich nach innen erstreckende, kontinuierliche, schraubenförmige Laufbahnen (13) aufweisen, die einen Rollpfad definieren, wobei die schraubenförmigen Laufbahnen mit den Führungskanälen der Seitenschienen (3, 4) ausgerichtet sind, um die benachbarten Querplatten (2) aufzunehmen, wenn sie nach vorne in eine zurückgezogene Position verschoben werden;
**dadurch gekennzeichnet, dass** die Abdeckungsanordnung ferner ein oder mehrere Hülsenelemente (7, 8) umfasst, die an der querliegenden Drehwelle (6) montiert sind, wobei das eine oder die mehreren zusammenklappbaren Vorhangeingriffsmittel (9, 10) jeweils gelenkig und verschiebbar an jeweils dem einen oder den mehreren Hülsenelementen (7, 8) montiert sind.

2. Abdeckungsanordnung nach Anspruch 1, wobei mindestens eine der Seitenwände (11, 12) des Gehäusekastens (5) eine Öffnung (15) umfasst.

3. Abdeckungsanordnung nach Anspruch 1 oder 2, wobei die querliegende Drehwelle (6) eine polygonale Form, vorzugsweise eine hexagonale Form, aufweist.

4. Abdeckungsanordnung nach einem der vorhergehenden Ansprüche, wobei die querliegende Drehwelle (6) hohl ist.

5. Abdeckungsanordnung nach Anspruch 2 und 4, wobei die querliegende Drehwelle (6) und ein Klemmsystem (24) an einer Seitenwand des Gehäusekastens dazu angepasst sind, eine torsionsfederbelastete Anordnung (17) verschiebbar und abnehmbar aufzunehmen.

6. Abdeckungsanordnung nach Anspruch 1 und 5, wobei die Abdeckungsanordnung ferner eine torsionsfederbelastete Anordnung (17) umfasst.

7. Abdeckungsanordnung nach Anspruch 2 und 4, wobei die querliegende Drehwelle (6) und ein Klemmsystem (24) an einer Seitenwand des Gehäusekastens dazu angepasst sind, eine Elektromotoranordnung (18) verschiebbar und abnehmbar aufzunehmen.

8. Abdeckungsanordnung nach Anspruch 1 und 7, wobei die Abdeckungsanordnung ferner eine Elektromotoranordnung (18) umfasst.

9. Abdeckungsanordnung nach Anspruch 8, wobei die Elektromotoranordnung (18) von einer intelligenten KI-Steuerplatine (19) angetrieben wird, die an dem Gehäusekasten (5) montiert ist.

10. Abdeckungsanordnung nach Anspruch 8 oder 9, wobei die Elektromotoranordnung (18) dazu konfiguriert ist, mittels der intelligenten KI-Steuerplatine (19) ferngesteuert zu werden.

11. Abdeckungsanordnung nach Anspruch 10, wobei die Elektromotoranordnung (18) durch eine Fernbedienung oder eine auf einem Smartphone installierte App ferngesteuert wird.

12. Abdeckungsanordnung nach Anspruch 6 und 8, wobei die torsionsfederbelastete Anordnung (17) und die Elektromotoranordnung (18) Antriebsmittel (20, 21) umfassen, die zur Drehung montiert sind, um mit der querliegenden Drehwelle (6) intern in Eingriff zu kommen.

13. Abdeckungssystem nach Anspruch 6 bis 12, wobei die torsionsfederbelastete Anordnung (17) und die Elektromotoranordnung (18) Eingriffsmittel (22, 23) zum Eingreifen in eine Seitenwand (11, 12) des Gehäusekastens (5) umfassen.

14. Abdeckungssystem nach Anspruch 6 bis 13, wobei eine Seitenwand (11, 12) des Gehäusekastens (5) einen Haltemechanismus (24) enthält, der ein Halteglied (25) umfasst, das jeweils selektiv zwischen einer ersten Position, in der ein Halteglied die Abnahme der torsionsfederbelasteten Anordnung (17) oder der Elektromotoranordnung (18) blockiert, und einer zweiten Position, in der das Halteglied die Abnahme der torsionsfederbelasteten Anordnung (17) oder der Elektromotoranordnung (18) nicht blockiert, bewegbar ist.

## Revendications

1. Ensemble de couverture pour la benne d'un véhicule de type pick-up, ledit ensemble de couverture comprenant :
un rideau enroulable (1) comprenant une pluralité de panneaux adjacents transversaux (2) reliés entre eux par des charnières ;
une paire de rails latéraux (3, 4) adaptés pour être montés sur les parties supérieures des parois latérales de la benne et comprenant des canaux de guidage permettant de guider les parties d'extrémité des panneaux adjacents transversaux (2) ;
un boîtier de logement (5) destiné à être monté à l'extrémité avant de la benne pour recevoir et stocker le rideau enroulable (1), dans lequel le boîtier de logement (5) comprend :
un arbre transversal rotatif (6) monté à l'intérieur du boîtier de logement (5) ;
un ou plusieurs moyens de mise en prise de rideau repliable (9, 10) conçus pour mettre en prise une extrémité intérieure du rideau enroulable (1) et pour transformer le mouvement de rotation de l'arbre (6) en un mouvement linéaire du rideau enroulable (1) ; et
des parois latérales (11, 12), chacun ayant des glissières hélicoïdales continues (13) s'étendant vers l'intérieur et définissant une trajectoire de roulement, les glissières hélicoïdales continues étant alignées avec les canaux de guidage des rails latéraux (3, 4) pour recevoir les panneaux adjacents transversaux (2) lorsqu'ils sont translatés vers l'avant dans une position rétractée ;
**caractérisé en ce que** l'ensemble de couverture comprend en outre un ou plusieurs éléments de manchon (7,8) montés sur ledit arbre rotatif transversal (6), dans lequel ledit ou lesdits moyens de mise en prise de rideaux repliables (9, 10) sont chacun montés de manière articulée et coulissante sur ledit ou lesdits éléments de manchon (7, 8), respectivement.

2. Ensemble de couverture selon la revendication 1, dans lequel au moins l'une des parois latérales (11, 12) du boîtier de logement (5) comprend une ouverture (15).

3. Ensemble de couverture selon la revendication 1 ou 2, dans lequel l'arbre rotatif transversal (6) a une forme polygonale, de préférence de forme hexagonale.

4. Ensemble de couverture selon l'une des revendications précédentes, dans lequel l'arbre rotatif transversal (6) est creux.

5. Ensemble de couverture selon les revendications 2 et 4, dans lequel l'arbre rotatif transversal (6) et un système de serrage (24) au niveau d'une paroi latérale du boîtier de logement sont adaptés pour recevoir de manière coulissante et amovible un ensemble chargé par ressort de torsion (17).

6. Ensemble de couverture selon les revendications 1 et 5, dans lequel l'ensemble de couverture comprend en outre un ensemble chargé par ressort de torsion (17).

7. Ensemble de couverture selon les revendications 2 et 4, dans lequel l'arbre rotatif transversal (6) et un système de serrage (24) au niveau d'une paroi latérale du boîtier de logement sont adaptés pour recevoir de manière coulissante et amovible un ensemble de moteur électrique (18).

8. Ensemble de couverture selon les revendications 1 et 7, dans lequel l'ensemble de couverture comprend en outre un ensemble de moteur électrique (18).

9. Ensemble de couverture selon la revendication 8, dans lequel le moteur électrique (18) est piloté par une carte de circuit imprimé d'organe de commande à IA intelligente (19) montée sur le boîtier de logement (5).

10. Ensemble de couverture selon la revendication 8 ou 9, l'ensemble de moteur électrique (18) est configuré pour être commandé à distance au moyen de la carte de circuit imprimé d'organe de commande à IA intelligente (19).

11. Ensemble de couverture selon la revendication 10, dans lequel l'ensemble de moteur électrique (18) est commandé à distance par une télécommande ou une application installée sur un smartphone.

12. Ensemble de couverture selon les revendications 6 et 8, dans lequel l'ensemble chargé par ressort de torsion (17) et l'ensemble de moteur électrique (18) comprennent des moyens d'entraînement (20, 21), montés pour la rotation, permettant de mettre en prise intérieurement l'arbre rotatif transversal (6).

13. Système de couverture selon les revendications 6 à 12, dans lequel l'ensemble chargé par ressort de torsion (17) et l'ensemble de moteur électrique (18) comprennent des moyens de mise en prise (22, 23) permettant de mettre en prise une paroi latérale (11, 12) du boîtier de logement (5).

14. Système de couverture selon les revendications 6 à 13, dans lequel une paroi latérale (11, 12) du boîtier de logement (5) comporte un mécanisme de retenue (24) comprenant un élément de retenue (25), qui est sélectivement mobile entre une première position où un élément de retenue bloque le retrait de l'ensemble chargé par ressort de torsion (17) ou de l'ensemble de moteur électrique (18), et une seconde position où l'élément de retenue ne bloque pas le retrait de l'ensemble chargé par ressort (17) ou de l'ensemble de moteur électrique (18), respectivement.
